# EUROPEAN PATENT SPECIFICATION

(11) **EP 2 257 910 B1**
(45) Date of publication and mention of the grant of the patent: **12.12.2012**
(21) Application number: 08873574.1
(22) Date of filing: 06.10.2008
(51) Int. Cl.: G06K 9/00, G06F 3/01

(54) **MOBILE DEVICE WITH IMAGE RECOGNITION PROCESSING CAPABILITY**
MOBILE VORRICHTUNG MIT BILDERKENNUNGS-VERARBEITUNGSFÄHIGKEIT
DISPOSITIF MOBILE CAPABLE DE TRAITEMENT DE RECONNAISSANCE D'IMAGE

(30) Priority: 24.03.2008 US 53812
(43) Date of publication of application: 08.12.2010
(73) Proprietor: Sony Ericsson Mobile Communications AB, 221 88 Lund (SE)
(72) Inventor: BLOEBAUM, L. Scott, Cary NC 27519 (US); RUTLEDGE, Melissa, Mebane NC 27302 (US); WAKEFIELD, Ivan Nelson, Cary NC 27513 (US)
(74) Representative: Wheatley, Alison Clare
(86) International application number: PCT/US2008/011532
(87) International publication number: WO 2009/120177

(56) References cited:
- EP-A- 1 710 717
- US-A1- 2006 046 803
- DIETER SCHMALSTIEG ET AL: "Experiences with Handheld Augmented Reality" MIXED AND AUGMENTED REALITY, 2007. ISMAR 2007. 6TH IEEE AND ACM INTERNATIONAL SYMPOSIUM ON, IEEE, PISCATAWAY, NJ, USA, 13 November 2007 (2007-11-13), pages 3-18, XP031269868 ISBN: 978-1-4244-1749-0
- JIE YANG ET AL: "Smart Sight: a tourist assistant system" WEARABLE COMPUTERS, 1999. DIGEST OF PAPERS. THE THIRD INTERNATIONAL SY MPOSIUM ON SAN FRANCISCO, CA, USA 18-19 OCT. 1999, LOS ALAMITOS, CA, USA,IEEE COMPUT. SOC, US, 18 October 1999 (1999-10-18), pages 73-78, XP010360088 ISBN: 978-0-7695-0428-5
- ROBERT ADELMANN ED - PENG YANG ET AL: "Mobile Phone Based Interaction with Everyday Products - On the Go" NEXT GENERATION MOBILE APPLICATIONS, SERVICES AND TECHNOLOGIES, 2007. NGMAST '07. THE 2007 INTERNATIONAL CONFERENCE ON, IEEE, PISCATAWAY, NJ, USA, 1 September 2007 (2007-09-01), pages 63-69, XP031142481 ISBN: 978-0-7695-2878-6
- BEAT FASEL ET AL: "Interactive Museum Guide: Accurate Retrieval of Object Descriptions" ADAPTIVE MULTIMEDIA RETRIEVAL: USER, CONTEXT, AND FEEDBACK; [LECTURE NOTES IN COMPUTER SCIENCE;;LNCS], SPRINGER BERLIN HEIDELBERG, BERLIN, HEIDELBERG, vol. 4398, 27 July 2006 (2006-07-27), pages 179-191, XP019078470 ISBN: 978-3-540-71544-3
- ANTIFAKOS S ET AL: "Proactive instructions for furniture assembly" UBICOMP 2002: UBIQUITOUS COMPUTING. 4TH INTERNATIONAL CONFERENCE. PROCEEDINGS (LECTURE NOTES IN COMPUTER SCIENCE VOL.2498) SPRINGER-VERLAG BERLIN, GERMANY, 2002, pages 351-360, XP002508865 ISBN: 3-540-44267-7
- LONGBIN CHEN ET AL: "Face annotation for family photo management" INTERNATIONAL JOURNAL OF IMAGE AND GRAPHICS, WORLD SCIENTIFIC PUBLISHING CO., SINGAPORE, SG, vol. 3, no. 1, 30 December 2002 (2002-12-30), pages 81-94, XP002361519 ISSN: 0219-4678

## Description

### FIELD OF THE INVENTION

The present invention relates to portable electronic devices, and in particular to portable electronic devices including cameras and video displays.

### BACKGROUND

With the continuing increases in processing and graphics capabilities of computers, there is an increasing amount of interest in various forms of Virtual Reality. In its purest form, Virtual Reality involves interaction among participants in a purely virtual world. However, there exists a middle ground between a Virtual Reality experience and a pure real-world experience.. In this middle ground, a user's experience includes a mixture of real and virtual elements.

Augmented reality (AR) is a field of computer research and application that deals with the interaction with both real-world and computer generated data. At present, most AR research is concerned with the use of live video imagery which is digitally processed and "augmented" by the addition of computer-generated graphics. Advanced research includes the use of motion-tracking data, fiducial marker recognition using machine vision, and the construction of controlled environments containing any number of sensors and actuators. Thus, Augmented Reality can be used to enhance a user's real-world experience or perception using virtual elements.

EP 1710717 discloses recognition of a product of an image captured with a portable camera telephone terminal and provided information related to the product.

DIETER SCHMALSTIEG ET AL: "Experiences with Handheld Augmented Reality" MIXED AND AUGMENTED REALITY, 2007. ISMAR 2007. 6TH IEEE AND ACM INTERNATIONAL SYMPOSIUM ON, IEEE, PISCATAWAY, NJ, USA, 13 November 2007 (2007-11-13), pages 3-18, discloses a stand-alone Augmented Reality (AR) system with self-tracking running on an unmodified personal digital assistant (PDA) with a commercial camera. It provides the user with a three-dimensional augmented view of the environment.

JIE YANG ET AL: "Smart Sight: a tourist assistant system", WEARABLE COMPUTERS, 1999. DIGEST OF PAPERS. THE THIRD INTERNATIONAL SYMPOSIUM ON SAN FRANCISCO, CA, USA 18-19 OCT. 1999, LOS ALAMITOS, CA, USA, IEEE COMPUT. SOC, US, 18 October 1999 (1999-10-18), pages 73-78 discloses developing an intelligent tourist system in which a user location is tracked to provide related information.

BEAT FASEL ET AL: "Interactive Museum Guide: Accurate Retrieval of Object Descriptions" ADAPTIVE MULTIMEDIA RETRIEVAL: USER, CONTEXT, AND FEEDBACK; [LECTURE NOTES IN COMPUTER SCIENCE; LNCS], SPRINGER BERLIN HEIDELBERG, BERLIN, HEIDELBERG, vol. 4398, 27 July 2006 (2006-07-27), pages 179-191, discloses an interactive guide that is able to automatically retrieve information about objects on display in museums.

### SUMMARY

Some embodiments include capturing an image of an object using a portable electronic device, displaying the image on a display screen of the portable electronic device, performing image recognition to identify the object, identifying information associated with the identified object, and displaying the information on the display screen of the portable electronic device.

The methods may further include displaying on the display screen a list of supplies used in performing a task associated with the identified object.

Capturing the image may include capturing the image using a camera in the portable electronic device, and identifying the object may include transmitting the image from the portable electronic device to an application server over a wireless communication interface and receiving identification information from the application server over the wireless communication interface.

Identifying the object may include generating a list of postulated object identifications in response to the transmitted image, transmitting the list of postulated object identifications to the portable electronic device, and presenting the list of postulated object identifications to a user of the portable electronic device so that the user can select one of the postulated object identifications from the list.

Identifying the object may include extracting features of the object from the image, and comparing extracted features to features of objects that are stored in an object identification database.

The captured image may include a static image, and the methods may further include scrolling over the static image until a part of the object is displayed. Performing image recognition to identify the object may include performing image recognition to identify the part of the object. The methods may further include identifying different parts of the object while scrolling over the static image, and displaying information about the respective different parts as they are identified.

The methods may further include determining if a supply on the list of supplies is in an inventory, and flagging the supply on the displayed list of supplies as being available in inventory.

The methods may further include determining if a supply on the list of supplies has been recently purchased, and flagging the supply on the displayed list of supplies as being recently purchased.

Determining if the supply has been recently purchased may include accessing a database of recent purchases.

The methods may further include identifying candidate tasks associated with the identified object, displaying a list of the candidate tasks, and selecting a task from among the list of candidate tasks.

The methods may further include generating a list of supplies used in performing the selected task in response to the selection of a task from among the list of candidate tasks.

A portable electronic device according to some embodiments includes a processor, a camera coupled to the processor and configured to capture an image, a display screen coupled to the processor and configured to display the image, and a module configured to identify the object from the image, to identify information associated with the identified object, and to display the information on the display screen of the portable electronic device.

The module may be further configured to superimpose the information onto the display screen over the image.

The module may be configured to transmit the image to an application server over a wireless communication interface and to receive identification information from the application server over the wireless communication interface.

The module may be configured to generate a list of postulated object identifications in response to the image, and to present the list of postulated object identifications to a user of the portable electronic device so that the user can select one of the postulated object identifications from the list.

The module may be configured to extract features of the object from the image, and to compare the extracted features to features of objects that are stored in an object identification database.

A computer program product according to some embodiments includes a computer readable storage medium having computer readable program code embodied in the medium. The computer readable program code includes computer readable program code configured to capture an image of an object using a portable electronic device, computer readable program code configured to display the image on a display screen of the portable electronic device, computer readable program code configured to perform image recognition to identify the object, computer readable program code configured to identify a task associated with the identified object, and computer readable program code configured to display information about the task on the display screen of the portable electronic device.

The computer program product may further include computer readable program code configured to capture the image using a camera in the portable electronic device, and computer readable program code configured to transmit the image from the portable electronic device to an application server over a wireless communication interface and to receive identification information from the application server over the wireless communication interface.

The computer program product may further include computer readable program code configured to extract features of the object from the image, and computer readable program code configured to compare extracted features to features of objects that are stored in an object identification database.

### DESCRIPTION OF THE DRAWINGS

The accompanying drawings, which are included to provide a further understanding of the invention and are incorporated in and constitute a part of this application, illustrate certain embodiment(s) of the invention. In the drawings:

Figure 1 is a block diagram of a system according to some embodiments.

Figure 2A is a schematic block diagram of a mobile telephone configured according to some embodiments.

Figure 2B is a schematic diagram of a memory organization for a mobile telephone according to some embodiments.

Figures 3A to 3C illustrate some possible applications of systems/methods according to some embodiments.

Figure 4 illustrates a mobile telephone according to some embodiments.

Figures 5-7 are flowcharts illustrating systems and/or methods according to some embodiments.

### DETAILED DESCRIPTION

The present invention now will be described more fully hereinafter with reference to the accompanying drawings, in which embodiments of the invention are shown. This invention should not be construed as limited to the embodiments set forth herein; rather, these embodiments are provided so that this disclosure will be thorough and complete, and will fully convey the scope of the invention to those skilled in the art. Like numbers refer to like elements throughout. Furthermore, the various features and regions illustrated in the figures are illustrated schematically. Accordingly, the present invention is not limited to the relative size and spacing illustrated in the accompanying figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Relative terms such as "below" or "above" or "upper" or "lower" or "horizontal" or "vertical" may be used herein to describe a relationship of one element, layer or region to another element, layer or region as illustrated in the figures. It will be understood that these terms are intended to encompass different orientations of the device in addition to the orientation depicted in the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

As will be appreciated by one of skill in the art, the present invention may be embodied as a method, data processing system, and/or computer program product. Accordingly, the present invention may take the form of an entirely hardware embodiment, an entirely software embodiment or an embodiment combining software and hardware aspects all generally referred to herein as a "circuit" or "module." Furthermore, the present invention may take the form of a computer program product on a tangible computer usable storage medium having computer program code embodied in the medium that can be executed by a computer. Any suitable tangible computer readable medium may be utilized including hard disks, CD ROMs, optical storage devices, or magnetic storage devices.

Some embodiments of the present invention are described below with reference to flowchart illustrations and/or block diagrams of methods, systems and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Mobile telephones, are primarily used for obtaining access to wireless telephone services through a cellular telephone network. However, as the capabilities of mobile telephones increase, an additional level of user functionality is being included in the hardware and/or software of such terminals. For example, a mobile telephone may be provided with a still and/or video camera, allowing pictures and/or videos to be taken by a user and transmitted from the mobile terminal to others. Many mobile telephones also include color display screens on which captured images and other images can be displayed.

Likewise, many mobile telephones include personal digital assistant (PDA) applications suitable for tracking and managing schedules, tasks and the like. Many mobile telephones also include messaging capability, such as electronic mail (e-mail), short message service (SMS) and multimedia message service (MMS) capabilities. Mobile telephones may also be capable of connecting to the Internet by using internet protoco) (IP) over wireless and/or wired networks.

Accordingly, due to their combination of portability, functionality and ability to access communication networks, mobile telephones may provide a convenient platform for implementing various levels of Augmented Reality for users.

Some embodiments implement Augmented Reality techniques using a portable electronic device, such as a mobile telephone, to recognize a particular task or item and/or to identify supplies and/or steps necessary to complete the task or adjust/create/use the item. Systems and/or methods according to some embodiments can identify supplies that the user currently does not have in his or her possession and/or inventory. Furthermore, systems/methods according to some embodiments may display the task/item identity along with a supply list and/or list of steps associated with the item on a view of the item on a display screen of the portable electronic device.

Accordingly, a user can quickly and easily identify tasks associated with an item without, for example, having to consult a user's manual or instruction book for the task or item.

Some embodiments may be particularly suited for implementation on a portable electronic device, such as a mobile telephone, that is equipped with a camera and a color display screen. Furthermore, while the processing capabilities of mobile telephones are continuously increasing, such devices may not have sufficient memory and/or processing capability to provide a full Augmented Reality experience as described herein. Accordingly, a mobile telephone that has data communication capability can cooperate with one or more remote servers to provide an Augmented Reality experience according to some embodiments.

In some embodiments, information can be superimposed onto a view of an object captured by a video-capable portable electronic device. The information superimposed onto the view can include an identity of the task or item recognized in the view and associated steps, supplies or ingredients necessary to repair, create, manipulate, adjust, use or build the task or item, as appropriate. In some embodiments, systems/methods can process an image and generate a list of postulates, or possible matches to an object in the image. A menu of postulates can be presented on the screen, and the user can select the appropriate object from the menu of postulates. The systems/methods can then generate a list of tasks/actions associated with the selected object and display the list of tasks/actions on the display screen. The user can then select a desired task/action from the displayed list. In response to the selection of a particular task/action from the displayed list, the systems/methods can display a list of steps and/or items needed to complete the task.

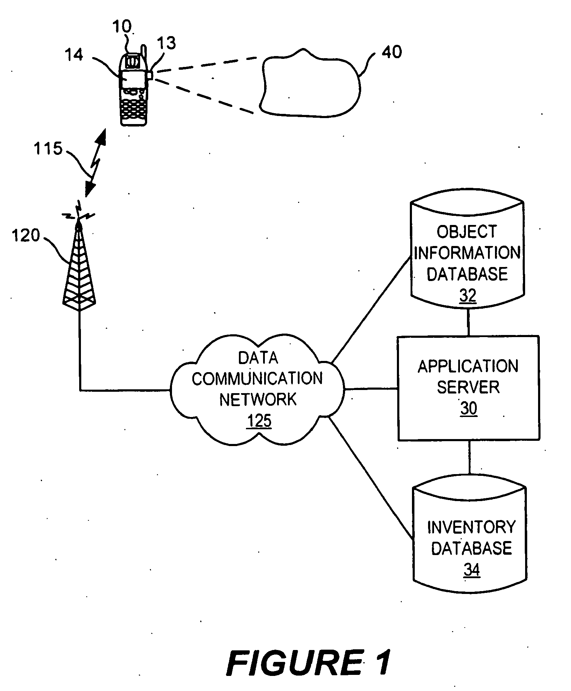

Systems and/or methods according to some embodiments are illustrated in Figure 1. As shown therein, a mobile telephone 10 including a display screen 14 and a camera 13 communicates with a base station 120 over a wireless interface 115. The wireless interface 115 can be implemented using one or more cellular communication protocols such as, Advanced Mobile Phone Service (AMPS), ANSI-136, Global Standard for Mobile (GSM) communication, General Packet Radio Service (GPRS), enhanced data rates for GSM evolution (EDGE), code division multiple access (CDMA), wideband-CDMA, CDMA2000, and Universal Mobile Telecommunications System (UMTS).

Using the camera 13, the user of the wireless telephone 10 captures an image of an object 40 and activates an application program in the mobile telephone 10 referred to herein as a Task Assistant Application (TAA). The TAA attempts to perform image recognition to identify the object, or portion of the object, captured in the image. The TAA further identifies one or more tasks associated with the object and associated steps, supplies or ingredients necessary to repair, create, manipulate, adjust, use or build the task or object. Finally, the TAA causes the mobile telephone 10 to display the steps, supplies and/or ingredients associated with the particular task/object.

It will be appreciated that the TAA may be implemented as one or more software modules entirely within the mobile telephone 10 in some embodiments. However, in other embodiments, the functionality of the TAA may be distributed between the mobile telephone 10 and other remote processors. For example, the TAA could be implemented using a client/server architecture in which a TAA client in the mobile telephone 10 is served by one or more remote servers that provide processing and/or database services to the TAA client in the mobile telephone 10. In some embodiments the TAA may be adapted to identify particular types of objects and/or tasks. Furthermore, in some embodiments, the TAA may be adapted to receive modules (also referred to as plug-ins or widgets) that are adapted to identify particular types of objects and/or tasks. For example, a retailer can provide a module for a TAA that enables the TAA to recognize and process images of items available for sale by the retailer. Similarly, an automobile manufacturer can provide a module for a TAA that enables the TAA to recognize and process images of automobiles and/or automobile parts produced by the manufacturer.

For example, as illustrated in Figure 1, the mobile telephone can be communicatively coupled through the base station 120 to one or more servers and/or databases, such as an object information database server 32, an application server 30, and/or an inventory database server 34. Other databases could be provided and accessed by the mobile telephone 10, as discussed in more detail below.

As further illustrated in Figure 1, the base station 120 can be communicatively coupled to the remote servers 30, 32, 34 through a public or private data communication network 125. In some embodiments, the data communication network 125 can include a public communication network, such as the Internet, and the base station 120 can be configured to communicate with the remote databases 30, 32, 34 using a communication protocol such as TCP/IP. However, it will be appreciated that the functionality of the servers 30, 32, 34 can be implemented within the base station 120 and/or that the base station 120 can communicate with the servers 30, 32, 34 through other means, such as a circuit-switched or dedicated communication link.

As further illustrated in Figure 1, the TAA client in the mobile telephone 10 can access the object information database server 32, the inventory database server 34 and/or the application server 30 independently. Moreover, the application server 30 can be configured to access the object information database server 32 and the inventory database 34 directly or via the data communication network 125.

After the user captures an image of the object 40, the image is transmitted over the wireless interface 115 to the base station 120 and then forwarded to the application server 30. The application server 30 receives the image from the user and performs image recognition to recognize the object or view in the image. For example, the application server 30 can attempt to match the image with stored images to identify the object.

In some embodiments, the application server 30 can extract one or more features from the image and compare the extracted features to object features stored in the object information database server 32. In general, a pattern recognition system includes a feature extraction mechanism that computes numeric or symbolic information about an image, and a classification or description scheme that classifies the extracted features. For example, features that can be extracted from an image can include scale-invariant and/or rotation-invariant features of the image. Object/image recognition techniques are well known to those skilled in the art and need not be described in detail herein. However, it will be appreciated that image recognition techniques can consume significant processing and storage resources.

The application server 30 can identify an object in the image without user interaction in some embodiments. In some other embodiments, the application server 30 can generate a list of possible matches (postulates) and send the list of postulates to the mobile telephone 10, which can display the list of postulates on the display screen 13. The user can make an appropriate selection from the list of postulates, and the selection can be transmitted back to the application server 30. The application server 30 can then generate a list of tasks/actions associated with the identified object and send the list of tasks/actions back to the mobile telephone 10, which can display the list of tasks/actions on the display screen 130. The user can then select a desired task/action from the displayed list. The selected task/action is then transmitted back to the application server 30, which can retrieve a list of steps and/or items required to complete the task and/or perform the action from the object recognition database and/or another database. The mobile telephone 10 can display the list of steps and/or items required to complete the task or perform the action on the display screen 13. In some embodiments, the list of steps and/or items can be superimposed over the image of the object 40 on the display screen 13.

In some embodiments, after identifying the task or action of interest, the application server 30 can consult the object information database server 32, or another related database, to find a list of supplies or ingredients needed to complete/perform the task.

Furthermore, in some embodiments, the application server 30 can consult an inventory database server 34 to determine which of the needed supplies or ingredients the user has in inventory and/or has recently purchased. For example, the inventory database server 34 can be linked to a retailer database that is updated based on customer purchases using an affinity card. Affinity cards are distributed by retailers to their customers. The cards are presented when the customer makes a purchase, allowing the retailer to track a customer's purchase and thereby obtain information about the customer's purchasing habits. In return, the retailer typically offers discounts to the customer for using the card. In some embodiments, the inventory database can be linked to more than one retailer affinity card, so that the inventory database 34 can keep track of purchases from several vendors.

Inventory information can be collected in other ways. For example, an automated inventory system can be used to populate the inventory database 34.

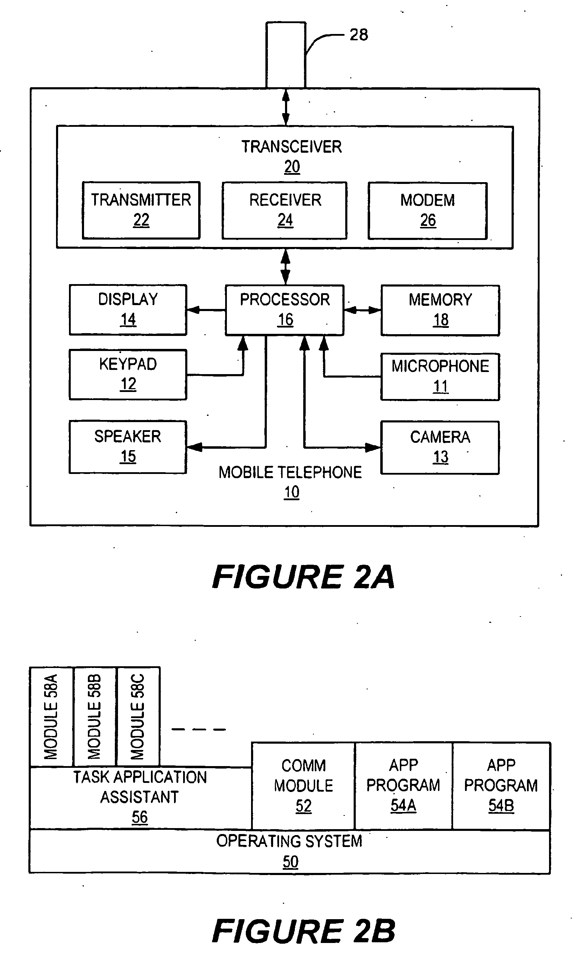

Embodiments of the present invention can be implemented using a mobile telephone 10 as illustrated in Figure 2A. As show therein, an exemplary mobile telephone 10 includes a keypad 12, a display 14, a transceiver 20, a memory 18, a microphone 11, a speaker 15 and a camera 13 that communicate with a processor 16.

The transceiver 20 typically includes a transmitter circuit 22, a receiver circuit 24, and a modem 26, which cooperate to transmit and receive radio frequency signals to remote transceivers via an antenna 28. The radio frequency signals transmitted between the mobile telephone 10 and the remote transceivers may comprise both traffic and control signals (e.g., paging signals/messages for incoming calls), which are used to establish and maintain communication with another party or destination. With a cellular communication module, the mobile telephone 10 can communicate via the base station(s) 120 using one or more cellular communication protocols such as, for example, AMPS, ANSI-136, GSM, GPRS, EDGE, CDMA, wideband-CDMA, CDMA2000, and UMTS. The cellular base stations may be connected to a Mobile Telephone Switching Office (MTSO) wireless network, which, in turn, can be connected to a public switched telephone network (PSTN) and/or another network.

The memory 18 may be a general purpose memory that is used to store both program instructions for the processor 16 as well as data, such as audio data, video data, configuration data, and/or other data that may be accessed and/or used by the processor 16. The memory 18 may include a nonvolatile read/write memory, a read-only memory and/or a volatile read/write memory. In particular, the memory 18 may include a read-only memory in which basic operating system instructions are stored, a nonvolatile read/write memory in which re-usable data, such as configuration information, directory information, and other information may be stored, as well as a volatile read/write memory, in which short-term instructions and/or temporary data may be stored.

A possible memory organization for a mobile telephone 10 is illustrated in Figure 2B. As shown therein, the memory includes an operating system 50. A communication module 52 provides communication services using the transceiver 20. A plurality of application programs 54A, 54B provide application services to the mobile telephone 10. For example, the application programs 54A, 54B can provide image capture and display, music playback, PDA, and/or other applications. A Task Assistant Application (TAA) 56 interfaces with the communication module 52 and the application programs 54A, 54B through the operating system 50. A plurality of plug-in modules 58A-C are provided. Each of the plug-in modules 58A-C can provide additional functionality to the TAA 56. For example, a plug-in module can be configured to assist the TAA 56 in identifying certain types of objects and/or tasks. The plug-in modules can be supplied by various third-party vendors, such as retailers and manufacturers. Information supplied by such parties can greatly reduce the computational.burden of image recognition with respect to their products. The TAA 56 may perform some image recognition functions. In some embodiments, the TAA 56 may act as a client application to access remote servers and/or databases using the communication module 52, as discussed above.

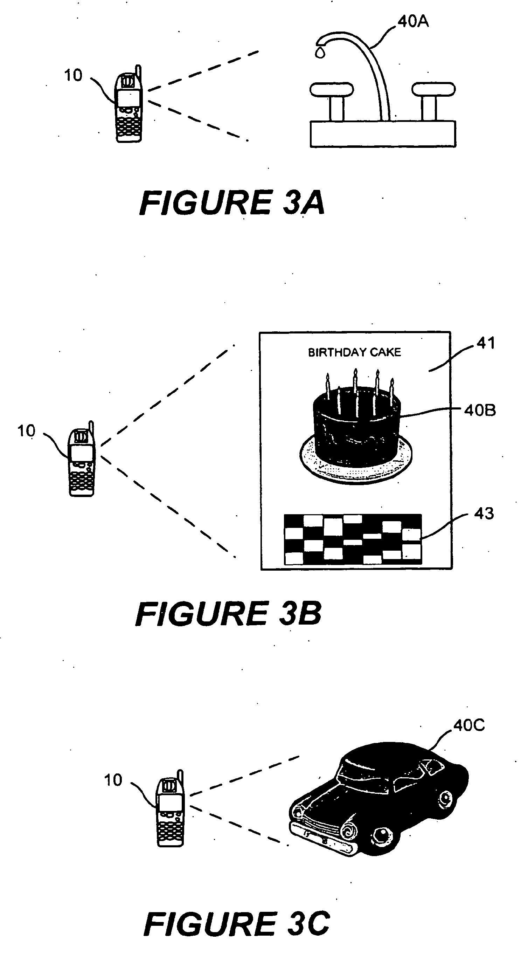

Examples of possible applications are illustrated in Figures 3A, 3B and 3C. For example, as shown in Figure 3A, a mobile telephone 10 equipped with a Task Assistant Application (TAA) 56 configured according to some embodiments can be used to take a picture of a leaky faucet 40A. The image of the leaky faucet 40A is transmitted to the application server 30. The application server 30 using image recognition techniques to generate a list of postulates for identifying objects in the image. For example, the TAA 56 may be configured with a "plumbing" module, and the application server 30 can tentatively identify the image as showing a kitchen faucet, a bath faucet, a drain, etc. The list of postulates is displayed on the display screen 14 of the mobile telephone 10, and the user selects the appropriate choice from the list. For example, the user may select "kitchen faucet" from the list. The user's selection is transmitted to the application server 30, which consults the object information database server 32 to identify a list of tasks/actions that can be taken relative to a kitchen faucet. For example, the list of tasks/actions could include installing a kitchen faucet, repairing a leaky kitchen faucet, unclogging a kitchen faucet, etc. The list is then transmitted to the mobile telephone 10 and displayed to the user. Once the user has selected a desired task/action from the list, the application server 30 retrieves a list of instructions and/or supplies needed to perform the selected task/action. The list of instructions/supplies is then transmitted to the mobile telephone 10 and displayed to the user on the display screen 14 along with the captured image.

Referring to Figure 3B, the mobile telephone 10 can be used to take a picture of a display card, advertising circular, or similar item showing a birthday cake 40B. The card 41 also may include a unique pattern 43, such as a barcode or similar or other pattern, that can be used for image recognition. Thus, in some embodiments, the mobile telephone 10 is not used to take a picture of the actual object, but of a picture of the object, a barcode associated with the object, and/or some other easily recognized pattern associated with the object. For example, a retailer such as a grocery store could display in its store an information card showing a particular dish. The information card can include a picture of the dish and/or a unique pattern, such as a bar code, that can be used for image recognition. It will be appreciated that the unique pattern can be designed to have feature sizes that are larger than the resolution of the camera 13 of the mobile telephone 10. Using a unique pattern such as the pattern 43 illustrated in Figure 3B can simplify the processing required for image recognition.

The TAA 56 can be equipped with a "baking" or "cooking" module. Upon identifying the object as a birthday cake, the application server 30 could consult the object information database server 32 to determine a list of supplies/steps needed to create the birthday cake. The application server 30 can then consult the inventory database 34 to determine if any of the supplies on the supply list have recently been purchased by the user. The application server 30 can then send the list of supplies or ingredients to the mobile telephone 10, together with indicators for each item on the list as to whether or not it was recently purchased by the user. The mobile telephone 10 superimposes this information onto the display screen 14 over the image of the birthday cake.

Accordingly, a user wishing to make the dish could take a picture of the information card 41 using a mobile telephone 10. The application server 30 and/or the mobile telephone 10 recognizes the information card by identifying and processing the unique pattern 43. The information about the dish (recipe, ingredients, supplies needed, etc.) is transmitted to the mobile telephone 10, which can be displayed on the display screen 14.

Referring to Figure 3C, the mobile telephone can be used to take a picture of a car 40C and/or of a piece of equipment on the car 40C, and the picture can be used as described above to obtain more information about the car and/or the piece of equipment on the car. For example, an automobile manufacturer could generate a TAA module including an object information database that relates to a particular model vehicle. The TAA module and associated object information database could then be made available to purchasers or potential purchasers of the vehicle through their mobile telephone 10. When the vehicle owner has a question about a particular part of the car, he or she could simply take a picture of the car or part in question and activate a Task Assistant Application 56 that has access to the object information database about the car.

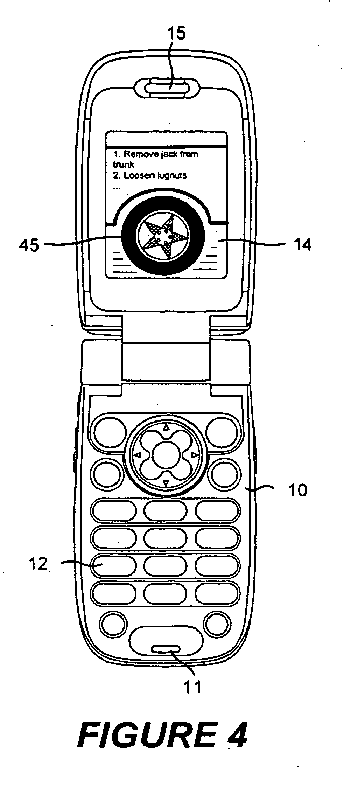

For example, referring to Figure 4, an automobile owner could use his or her mobile telephone 10 to take a picture of a wheel 45 of a car. The TAA 56 can identify the image as being of a wheel and present the user with a list of tasks/actions associated with the wheel, such as change the tire, check tire inflation, etc. It will be appreciated that to make the image recognition process more efficient and/or simple, an automobile manufacturer can generate an object information database containing computer models and/or feature information for various parts of the automobile that a purchaser is likely to have questions about. For example, the manufacturer can generate a set of views from a multi-dimensional computer model of the object and can generate various features, including shift- and/or scale-invariant features, from a plurality of views of the object model. The features can then be stored in an object information database that can be distributed along with a plug-in module for a TAA 56.

Once the object is recognized and an appropriate task/action is selected, the TAA 56 causes the mobile telephone to display information about the task, as shown in Figure 4.

In some embodiments, a user can scroll through/across a static or dynamic image of an object to view/select parts of the object. As the user scrolls over various parts of the object, the parts can be automatically recognized by the TAA 56, which can then provide information to the user about the recognized part. The user can scroll over portions of a static image, for example, using direction arrow keys on the mobile telephone 10. The user can scroll over portions of a dynamic (e.g. moving) image, for example, by moving the mobile telephone 10 so that different parts and/or views of the object are visible on the display 14.

In some embodiments, one or more characteristics of the object (or part of the object) can be used to determine what information is to be displayed. Such characteristics can include a color, texture, shape, marking, position, location of the object, and/or movement of the object. The image view of the object can be zoomed in or out and/or scrolled to select a particular part for the information to be displayed. In some embodiments, the image can stay in the display with the displayed information superimposed on top of the object, or the information can be displayed on another part of the display and/or on another display.

For example if the object is a vehicle, the information displayed to the user could include technical data, maintenance data, instructions on use or repair, etc. for the vehicle and/or an identified part of the vehicle. Thus, if the user scrolls over a tire of the vehicle, then the TAA 56 can cause the recommended tire pressure to be shown. If the user scrolls over the engine, then a maintenance schedule can be shown. For the car radio, the TAA 56 can provide information on settings, how to operate it, etc. For an engine component, such as an alternator, the TAA 56 can display information about how to test and/or replace it.

Many other applications/examples are possible. For example, if the object is a bridge, the TAA can display details of construction or specifications on each part of the bridge. Similarly, if the object is an appliance, test, repair, or operation information can be displayed.

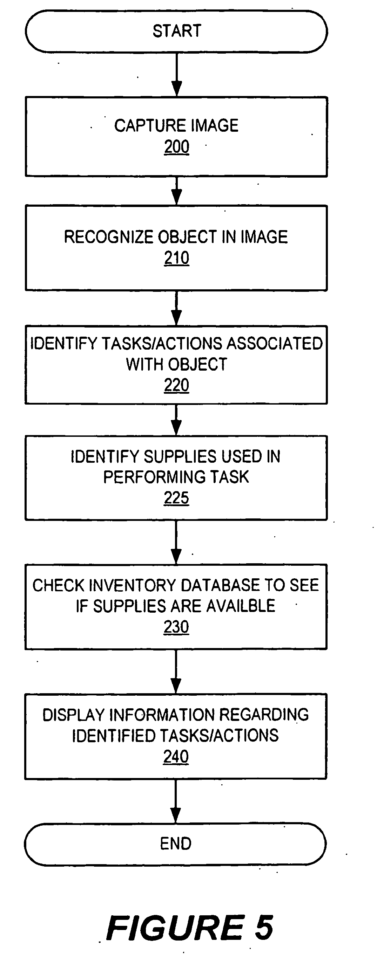

Some embodiments are illustrated in the flowchart of Figure 5. As shown therein, an image is captured (Block 200). The image is processed in an attempt to recognize an object in the image (Block 210). In some embodiments, a list of postulates, or possible matches to an object in the image, is generated, and the user is prompted to select from among the list of postulates. A list of tasks/actions associated with the selected object is then generated and displayed to the user (Block 220). The user can then select a desired task/action from the displayed list. In response to the selection of a particular task/action from the displayed list, supplies used in performing the task can be identified (Block 225). The inventory database can be checked to determine if the identified supplies are available and/or have been recently purchased (Block 230). Information about the identified task/action, including steps necessary to perform the task and/or supplies used to perform the task, is displayed to the user (Block 240). For example, a list of steps and/or items required to complete the task can be displayed to the user. In some embodiments, the list of steps and/or items required to complete the task can be superimposed on the image of the object captured by the user. Items that need to be purchased can be flagged or highlighted for the user.

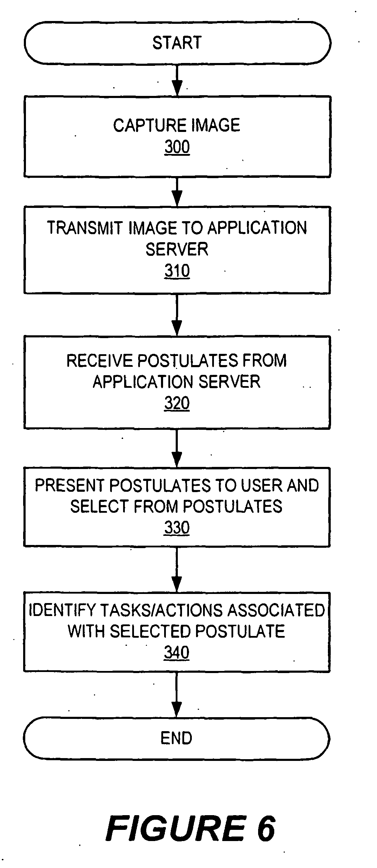

Figure 6 is a flowchart that illustrates systems/methods according to further embodiments. As illustrated therein, an image is captured by a portable electronic device (Block 300) and transmitted to an application server (Block 310). The application server performs image recognition on the image and identifies one or more postulates, or possible identifications, of the object in the image. The postulates are transmitted back to the portable electronic device, which receives the postulates (Block 320) and displays them to the user, who selects a matching object from the list (Block 330). The systems/methods then identify one or more task/s/actions associated with the selected postulate.

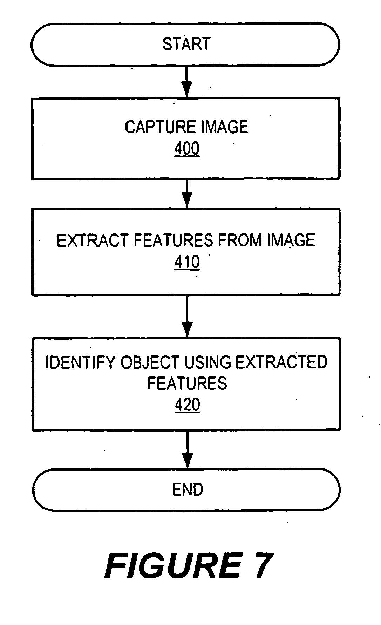

Further embodiments are illustrated in Figure 7. As shown therein, an image is captured (Block 400). Features are extracted from the image (Block 410) and the extracted features are used to identify an object in the image (Block 420). It will be appreciated that the image recognition processing illustrated in Figure 7 can be performed locally in the portable electronic device that was used to capture the image and/or at a remote server, depending on the complexity of the image recognition processing required or desired. For example, as disclosed above, some embodiments employ bar codes or other unique patterns that may be recognized easily by a portable electronic device with limited computing power. In other embodiments where more sophisticated image recognition is required, a remote server may assist in the image recognition process.

In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method, comprising:
capturing (200) an image of an object using a portable electronic device (10);
displaying the image on a display screen (14) of the portable electronic device (10);
performing (210) image recognition to identify the object;
identifying (220) information associated with the identified object;
**characterised in that** the method further comprises:
displaying (240) the information on the display screen (14) of the portable electronic device (10), wherein displaying the information comprises displaying a list of supplies used in performing an action on the identified object;
determining (230) if a supply on the list of supplies has been recently purchased; and
flagging the supply on the displayed list of supplies as being recently purchased;
wherein determining (230) if the supply has been recently purchased comprises accessing a database in the portable electronic device of recent purchases.

2. The method of Claim 1, further comprising:
determining if a supply on the list of supplies is in an inventory; and
flagging the supply on the displayed list of supplies as being available in inventory.

3. The method of Claim 1, wherein capturing the image comprises capturing the image using a camera (13) in the portable electronic device (10); and
wherein identifying the object comprises transmitting the image from the portable electronic device (10) to an application server (30) over a wireless communication interface (125) and receiving identification information from the application server (30) over the wireless communication interface (125).

4. The method of Claim 3, wherein identifying the object comprises:
generating a list of postulated object identifications in response to the transmitted image;
transmitting the list of postulated object identifications to the portable electronic device (10); and
presenting (330) the list of postulated object identifications to a user of the portable electronic device (10) so that the user can select one of the postulated object identifications from the list.

5. The method of Claim 4, wherein identifying the object comprises:
extracting (410) features of the object from the image; and
comparing extracted features to features of objects that are stored in an object identification database.

6. The method of Claim 1, wherein the captured image comprises a static image, the method further comprising:
scrolling over the static image until a part of the object is displayed;
wherein performing image recognition to identify the object comprises performing image recognition to identify the part of the object.

7. The method of Claim 6, further comprising:
identifying different parts of the object while scrolling over the static image; and
displaying information about the respective different parts as they are identified.

8. The method of Claim 1, further comprising:
identifying candidate tasks associated with the identified object;
displaying a list of the candidate tasks; and
selecting a task from among the list of candidate tasks.

9. The method of Claim 8, further comprising:
generating a list of supplies used in performing the selected task in response to the selection of a task from among the list of candidate tasks.

10. A portable electronic device (10), comprising:
a processor (16);
a camera (13) coupled to the processor (16) and configured to capture an image;
a display screen (14) coupled to the processor (16) and configured to display the image;
**characterised in that** the portable electronic device (10) further comprises:
a module configured to identify the object from the image, to identify task information associated with the identified object, and to display the information about the task on the display screen (14) of the portable electronic device (10) wherein the information comprises a list of supplies used in performing an action on the identified object, to determine if a supply on the list of supplies has been recently purchased by accessing a database in the portable electronic device (10) of recent purchases, and to flag the supply on the displayed list of supplies as being recently purchased.

11. The portable electronic device (10) of Claim 10, wherein the module is further configured to determine if a supply on the list of supplies is in an inventory, and to flag the supply on the displayed list of supplies as being available in inventory.

12. A computer program product, comprising:
a computer readable storage medium having computer readable program code embodied in the medium, the computer readable program code comprising:
computer readable program code configured to capture (200) an image of an object using a portable electronic device (10);
computer readable program code configured to display the image on a display screen (14) of the portable electronic device (10);
computer readable program code configured to perform image recognition (210) to identify the object;
**characterised in that** the computer readable program code further comprises:
computer readable program code configured to identify (220) a task associated with the identified object;
computer readable program code configured to display (240) information about the task on the display screen (14) of the portable electronic device (10);
computer readable program code configured to display a list of supplies used in performing an action on the identified object;
computer readable program code configured to determine (230) if a supply on the list of supplies has been recently purchased by accessing a database in the portable electronic device (10) of recent purchases; and
computer readable program code configured to flag the supply on the displayed list of supplies as being recently purchased.

13. The computer program product of Claim 12, further comprising:
computer readable program code configured to determine if a supply on the list of supplies is in an inventory;
computer readable program code configured to flag the supply on the displayed list of supplies as being available in inventory.

14. The computer program product of Claim 12, further comprising:
computer readable program code configured to capture the image using a camera in the portable electronic device; and
computer readable program code configured to transmit the image from the portable electronic device to an application server over a wireless communication interface and to receive identification information from the application server over the wireless communication interface.

15. The computer program product of Claim 12, further comprising:
computer readable program code configured to extract features of the object from the image; and
computer readable program code configured to compare extracted features to features of objects that are stored in an object identification database.

## Patentansprüche

1. Verfahren, umfassend:
Aufnehmen (200) eines Bildes eines Gegenstandes mit einer tragbaren Elektronikvorrichtung (10);
Anzeigen des Bildes auf einem Bildschirm (14) der tragbaren Elektronikvorrichtung (10);
Durchführen (210) einer Bilderkennung zur Identifikation des Gegenstandes;
Identifizieren (220) von Information, die mit dem identifizierten Gegenstand zusammenhängt;
**dadurch gekennzeichnet, dass** das Verfahren zudem umfasst:
Anzeigen (240) der Information auf dem Bildschirm (14) der tragbaren Elektronikvorrichtung (10), wobei das Anzeigen der Information das Anzeigen einer Liste von Angeboten umfasst, die bei der Durchführung einer Maßnahme am identifizierten Gegenstand verwendet werden;
Bestimmen (230), ob ein Angebot auf der Angebotsliste vor kurzem erworben wurde; und
Markieren des Angebots auf der angezeigten Liste der Angebote, die vor kurzem erworben wurden;
wobei das Bestimmen, (230), ob das Angebot vor kurzem erworben wurde, den Zugriff auf eine Datenbank in der tragbaren Elektronikvorrichtung der neuesten Anschaffungen umfasst.

2. Verfahren nach Anspruch 1, zudem umfassend:
Bestimmen, ob ein Angebot auf der Angebotsliste im Bestand ist; und
Kennzeichnen des Angebots auf der angezeigten Angebotsliste als im Bestand verfügbar.

3. Verfahren nach Anspruch 1, wobei das Aufnehmen des Bildes das Aufnehmen des Bildes mit einer Kamera (13) in der tragbaren Elektronikvorrichtung (10) umfasst;
und
wobei das Identifizieren des Gegenstandes das Übertragen des Bildes von der tragbaren Elektronikvorrichtung (10) an einen Anwendungsserver (30) über ein Drahtloskommunikations-Interface (125) und Empfangen von Identifikationsinformation vom Anwendungsserver (30) über das Drahtloskommunikations-Interface (125) umfasst.

4. Verfahren nach Anspruch 3, wobei das Identifizieren des Gegenstandes umfasst:
Erzeugen einer Liste mutmaßlicher Gegenstandsidentifikationen in Reaktion auf das übertragene Bild;
Übertragen der Liste mutmaßlicher Gegenstandsidentifikationen zu der tragbaren Elektronikvorrichtung (10); und
Darbieten (330) der Liste mutmaßlicher Gegenstandsidentifikationen einem Nutzer der tragbaren Elektronikvorrichtung (10), so dass der Nutzer eine der mutmaßlichen Gegenstandsidentifikationen aus der Liste wählen kann.

5. Verfahren nach Anspruch 4, wobei das Identifizieren des Gegenstandes umfasst:
Gewinnen (410) der Eigenschaften des Gegenstandes aus dem Bild; und
Vergleichen der gewonnenen Eigenschaften mit Eigenschaften von Gegenständen, die in einer Gegenstands-Identifikations-Datenbank gespeichert sind.

6. Verfahren nach Anspruch 1, wobei das aufgenommene Bild ein statisches Bild umfasst, und das Verfahren zudem umfasst:
Scrollen über das statische Bild, bis ein Teil des Gegenstandes angezeigt wird:
wobei das Durchführen der Bilderkennung zur Identifikation des Gegenstandes das Durchführen der Bilderkennung zur Identifikation des Teils des Gegenstandes umfasst.

7. Verfahren nach Anspruch 6, zudem umfassend:
Identifizieren verschiedener Teile des Gegenstandes, während über das statische Bild gescrollt wird; und
Anzeigen von Information über die jeweils unterschiedlichen Teile bei ihrer Identifikation.

8. Verfahren nach Anspruch 1, zudem umfassend:
Identifizieren von Kandidatenanwendungen, die mit dem identifizierten Gegenstand zusammenhängen;
Anzeigen einer Liste von Kandidatenanwendungen; und
Auswählen einer Anwendung aus der Liste der Kandidatenanwendungen.

9. Verfahren nach Anspruch 8, zudem umfassend:
Erstellen einer Liste von Angeboten, die bei der Durchführung der ausgewählten Anwendung in Reaktion auf die Auswahl einer Anwendung in der Liste von Kandidatenanwendungen verwendet werden.

10. Tragbare Elektronikvorrichtung (10), umfassend:
einen Prozessor (16);
eine Kamera (13), die an den Prozessor (16) angeschlossen ist und so konfiguriert ist, dass sie ein Bild aufnimmt;
einen Bildschirm (14), der an den Prozessor (16) angeschlossen ist und so konfiguriert ist, dass er das Bild anzeigt;
**dadurch gekennzeichnet, dass** die tragbare Elektronikvorrichtung (10) zudem umfasst:
ein Modul, das so konfiguriert ist, dass es den Gegenstand aus dem Bild identifiziert, Anwendungsinformation identifiziert, die mit dem identifizierten Gegenstand zusammenhängt, und es die Information über die Anwendung auf dem Bildschirm (14) der tragbaren Elektronikvorrichtung (10) anzeigt, wobei die Information eine Liste von Angeboten umfasst, die bei der Durchführung einer Maßnahme am identifizierten Gegenstand verwendet werden, so dass bestimmt wird, ob ein Angebot auf der Angebotsliste vor kurzem erworben wurde, indem auf eine Datenbank in der tragbaren Elektronikvorrichtung (10) der neuesten Anschaffungen zugegriffen wird, und um das Angebot auf der angezeigten Angebotsliste als vor kurzem erworben zu kennzeichnen.

11. Tragbare Elektronik-Vorrichtung (10) nach Anspruch 10, wobei das Modul zudem so konfiguriert ist, dass bestimmt wird, ob ein Angebot auf der Angebotsliste im Bestand ist, und dass das Angebot auf der angezeigten Angebotsliste als im Bestand verfügbar markiert wird.

12. Computerprogrammprodukt, umfassend:
ein computerlesbares Speichermedium mit in dem Medium enthaltenem computerlesbarem Programmcode, wobei der computerlesbare Programmcode umfasst:
einen computerlesbaren Programmcode, der so konfiguriert ist, dass ein Bild eines Gegenstandes mit einer tragbaren Elektronikvorrichtung (10) aufgenommen (200) wird;
einen computerlesbaren Programmcode, der so konfiguriert ist, dass das Bild auf einem Bildschirm (14) der tragbaren Elektronikvorrichtung (10) angezeigt wird;
einen computerlesbaren Programmcode, der so konfiguriert ist, dass eine Bilderkennung (210) zum Identifizieren des Gegenstandes durchgeführt wird;
**dadurch gekennzeichnet, dass** der computerlesbare Programmcode zudem umfasst:
einen computerlesbaren Programmcode, der so konfiguriert ist, dass eine Anwendung, die mit dem identifizierten Gegenstand zusammenhängt, identifiziert (220) wird;
einen computerlesbaren Programmcode, der so konfiguriert ist, dass Information bezüglich der Aufgabe auf dem Bildschirm (14) der tragbaren Elektronikvorrichtung (10) angezeigt (240) wird;
einen computerlesbaren Programmcode, der so konfiguriert ist, dass eine Liste von Angeboten angezeigt wird, die bei der Durchführung einer Maßnahme am identifizierten Gegenstand verwendet werden;
einen computerlesbaren Programmcode, der so konfiguriert ist, dass bestimmt (230) wird, ob ein Angebot auf der Angebotsliste vor kurzem erworben wurde, indem auf eine Datenbank in der tragbaren Elektronikvorrichtung (10) der neuesten Anschaffungen zugegriffen wird; und
einen computerlesbaren Programmcode, der so konfiguriert ist, dass das Angebot auf der angezeigten Angebotsliste als vor kurzem erworben gekennzeichnet wird.

13. Computerprogrammprodukt nach Anspruch 12, zudem umfassend:
einen computerlesbaren Programmcode, der so konfiguriert ist, dass bestimmt wird, ob ein Angebot auf der Angebotsliste im Bestand ist;
einen computerlesbaren Programmcode, der so konfiguriert ist, dass das Angebot auf der angezeigten Angebotsliste als im Inventar verfügbar gekennzeichnet wird.

14. Computerprogrammprodukt nach Anspruch 12, zudem umfassend:
einen computerlesbaren Programmcode, der so konfiguriert ist, dass das Bild mit einer Kamera in der tragbaren Elektronikvorrichtung aufgenommen wird; und
einen computerlesbaren Programmcode, der so konfiguriert ist, dass das Bild von der tragbaren Elektronikvorrichtung zu einem Anwendungsserver über ein Drahtloskommunikations-Interface übertragen wird, und die Identifikationsinformation von dem Anwendungsserver über das DrahtlosKommunikations-Interface empfangen wird.

15. Computerprogrammprodukt nach Anspruch 12, zudem umfassend:
einen computerlesbaren Programmcode, der so konfiguriert ist, dass Eigenschaften des Gegenstandes aus dem Bild gewonnen werden; und
einen computerlesbaren Programmcode, der so konfiguriert ist, dass die gewonnenen Eigenschaften mit Eigenschaften von Gegenständen verglichen werden, die in einer Gegenstands-Identifikations-Datenbank gespeichert sind.

## Revendications

1. Procédé, comprenant :
la capture (200) d'une image d'un objet au moyen d'un dispositif électronique portable (10) ;
l'affichage de l'image sur un écran d'affichage (14) du dispositif électronique portable (10) ;
la mise en oeuvre (210) d'une reconnaissance d'image en vue d'identifier l'objet ;
l'identification (220) d'informations associées à l'objet identifié ;
**caractérisé en ce que** le procédé comprend en outre :
l'affichage (240) des informations sur l'écran d'affichage (14) du dispositif électronique portable (10), dans lequel l'affichage des informations comprend l'affichage d'une liste de fournitures utilisée en vue d'exécuter une action sur l'objet identifié ;
la détermination (230) du fait qu'une fourniture dans la liste de fournitures a été ou non récemment achetée ; et
la signalisation de la fourniture dans la liste de fournitures affichée comme ayant été récemment achetée ;
dans lequel la détermination (230) du fait que la fourniture a été ou non récemment achetée comprend l'accès à une base de données des achats récents incluse dans le dispositif électronique portable.

2. Procédé selon la revendication 1, comprenant en outre :
la détermination du fait qu'une fourniture dans la liste de fournitures est ou non dans un inventaire ; et
la signalisation de la fourniture dans la liste de fournitures affichée comme étant disponible dans l'inventaire.

3. Procédé selon la revendication 1, dans lequel la capture de l'image consiste à capture l'image au moyen d'une caméra (13) dans le dispositif électronique portable (10) ; et
dans lequel l'identification de l'objet comprend la transmission de l'image, du dispositif électronique portable (10) à un serveur d'applications (30), sur une interface de communication sans fil (125) et la réception d'informations d'identification en provenance du serveur d'applications (30) sur l'interface de communication sans fil (125).

4. Procédé selon la revendication 3, dans lequel l'identification de l'objet comprend :
la génération d'une liste d'identifications d'objets hypothétiques en réponse à l'image transmise ;
la transmission de la liste d'identifications d'objets hypothétiques au dispositif électronique portable (10) ; et
la présentation (330) de la liste d'identifications d'objets hypothétiques à un utilisateur du dispositif électronique portable (10), de sorte que l'utilisateur peut sélectionner l'une des identifications d'objets hypothétiques à partir de la liste.

5. Procédé selon la revendication 4, dans lequel l'identification de l'objet comprend :
l'extraction (410) de caractéristiques de l'objet à partir de l'image ; et
la comparaison des caractéristiques extraites à des caractéristiques d'objets qui sont stockées dans une base de données d'identifications d'objets.

6. Procédé selon la revendication 1, dans lequel l'image capturée comprend une image statique, le procédé comprenant en outre :
le défilement au-dessus de l'image statique jusqu'à ce qu'une partie de l'objet soit affichée ;
dans lequel l'exécution de la reconnaissance d'image en vue d'identifier l'objet consiste à exécuter la reconnaissance d'image en vue d'identifier la partie de l'objet.

7. Procédé selon la revendication 6, comprenant en outre :
l'identification de différentes parties de l'objet lors du défilement au-dessus de l'image statique ; et
l'affichage d'informations sur les différentes parties respectives telles qu'elles sont identifiées.

8. Procédé selon la revendication 1, comprenant en outre :
l'identification de tâches candidates associées à l'objet identifié ;
l'affichage d'une liste des tâches candidates ; et
la sélection d'une tâche à partir de la liste de tâches candidates.

9. Procédé selon la revendication 8, comprenant en outre :
la génération d'une liste de fournitures utilisée pour exécuter la tâche sélectionnée en réponse à la sélection d'une tâche à partir de la liste de tâches candidates.

10. Dispositif électronique portable (10), comprenant :
un processeur (16) ;
une caméra (13) couplée au processeur (16) et configurée de manière à capturer une image ;
un écran d'affichage (14) couplé au processeur (16) et configuré de manière à afficher l'image ;
**caractérisé en ce que** le dispositif électronique portable (10) comprend en outre :
un module configuré de manière à identifier l'objet à partir de l'image, à identifier des informations de tâches associées à l'objet identifié, et à afficher les informations relatives à la tâche sur l'écran d'affichage (14) du dispositif électronique portable (10), dans lequel les informations comprennent une liste de fournitures utilisée lors de l'exécution d'une action sur l'objet identifié, à déterminer si une fourniture dans la liste de fournitures a été récemment achetée, en accédant à une base de données des achats récents dans le dispositif électronique portable (10), et à signaler la fourniture dans la liste de fournitures affichée comme ayant été récemment achetée.

11. Dispositif électronique portable (10) selon la revendication 10, dans lequel le module est en outre configuré de manière à déterminer si une fourniture dans la liste de fournitures est dans un inventaire, et à signaler la fourniture dans la liste de fournitures affichée comme étant disponible dans l'inventaire.

12. Produit-programme informatique, comprenant :
un support de stockage lisible par ordinateur présentant un code de programme lisible par ordinateur intégré dans le support, le code de programme lisible par ordinateur comprenant :
un code de programme lisible par ordinateur configuré de manière à capturer (200) une image d'un objet au moyen d'un dispositif électronique portable (10) ;
un code de programme lisible par ordinateur configuré de manière à afficher l'image sur un écran d'affichage (14) du dispositif électronique portable (10) ;
un code de programme lisible par ordinateur configuré de manière à exécuter une reconnaissance d'image (210) en vue d'identifier l'objet ;
**caractérisé en ce que** le code de programme lisible par ordinateur comprend en outre :
un code de programme lisible par ordinateur configuré de manière à identifier (220) une tâche associée à l'objet identifié ;
un code de programme lisible par ordinateur configuré de manière à afficher (240) des informations relatives à la tâche sur l'écran d'affichage (14) du dispositif électronique portable (10) ;
un code de programme lisible par ordinateur configuré de manière à afficher une liste de fournitures utilisée en vue d'exécuter une action sur l'objet identifié ;
un code de programme lisible par ordinateur configuré de manière à déterminer (230) si une fourniture dans la liste de fournitures a été récemment achetée, en accédant à une base de données des achats récents, dans le dispositif électronique portable (10) ; et
un code de programme lisible par ordinateur configuré de manière à signaler la fourniture dans la liste de fournitures affichée comme ayant été récemment achetée.

13. Produit-programme informatique selon la revendication 12, comprenant en outre :
un code de programme lisible par ordinateur configuré de manière à déterminer si une fourniture dans la liste de fournitures est dans un inventaire ;
un code de programme lisible par ordinateur configuré de manière à signaler la fourniture dans la liste de fournitures affichée comme étant disponible dans l'inventaire.

14. Produit-programme informatique selon la revendication 12, comprenant en outre :
un code de programme lisible par ordinateur configuré de manière à capturer l'image au moyen d'une caméra dans le dispositif électronique portable ; et
un code de programme lisible par ordinateur configuré de manière à transmettre l'image, du dispositif électronique portable à un serveur d'applications, sur une interface de communication sans fil, et à recevoir des informations d'identification en provenance du serveur d'applications sur l'interface de communication sans fil.

15. Produit-programme informatique selon la revendication 12, comprenant en outre :
un code de programme lisible par ordinateur configuré de manière à extraire des caractéristiques de l'objet à partir de l'image ; et
un code de programme lisible par ordinateur configuré de manière à comparer des caractéristiques extraites à des caractéristiques d'objets qui sont stockées dans une base de données d'identifications d'objets.
